(19) Europäisches Patentamt
European Patent Office
Office européen des brevets

(11) **EP 1 403 845 B1**

(12) **EUROPEAN PATENT SPECIFICATION**

(45) Date of publication and mention
of the grant of the patent:
**09.09.2009   Bulletin 2009/37**

(51) Int Cl.:
***G09G 5/10*** (2006.01)      ***G09G 5/00*** (2006.01)

(21) Application number: **02258678.8**

(22) Date of filing: **17.12.2002**

(54) **Method of controlling brightness of user-selected area for image display device**

Verfahren der Helligkeitskontrolle eines vom Benutzer ausgewählten Gebietes für eine Bildanzeigevorrichtung

Méthode de contrôle de la luminosité d'une region selectionée par un utilisateur pour un dispositif d'affichage d'images

(84) Designated Contracting States:
**DE FR GB NL**

(30) Priority:  **27.09.2002   US 256233**

(43) Date of publication of application:
**31.03.2004   Bulletin 2004/14**

(73) Proprietor: **LG Electronics, Inc.
Seoul (KR)**

(72) Inventors:
• **Yoon, Jong Kun
Gumee-shi,
Kyungsangbook-do (KR)**
• **Kim, Byung Han
Gumee-shi,
Kyungsangbook-do (KR)**
• **Kim, Hong Ki
Book-gu,
Taegu (KR)**
• **Shafir, Alexander
Gumee-shi,
Kyungsangbook-do (KR)**

(74) Representative: **Hale, Peter et al
Kilburn & Strode LLP
20 Red Lion Street
London WC1R 4PJ (GB)**

(56) References cited:
**EP-A1- 0 957 631          WO-A-01/41117**

**Description**

The present invention relates to an image display device, and more particularly, to a method of controlling brightness of a user-selected area for an image display device.

Typical computer-related display systems use a Cathode Ray Tube (CRT) monitor for displaying various types of data including video and text. For displaying video data such as motion pictures, graphics, and photographs on the CRT monitor, a reasonably high level of luminosity is often required because far more colors are used to provide realistic shading and variations in color. The increase in the luminosity range of the video data on the CRT monitor makes the video image richer in contrast and brightness, improving the perceived quality of the image.

However, compared to TV systems, the existing computer-related display systems that include a CRT monitor usually do not provide enough luminosity when displaying the mentioned video data. For example, when a video signal for an ordinary TV system (e.g., a broadcasting video signal or any other signal for display on a TV screen) is displayed on one of the ordinary CRT monitors, the brightness of the displayed image is typically too low and the image is too dark and shadowy. This is because the brightness parameters of the existing computer-related display systems are usually more limited than those of the TV systems.

In order to obviate the problem set above, it would be highly desirable to have a method of greatly increasing the luminosity level of a user-selected area of the CRT screen while retaining the luminosity of the all other areas at a relatively lower level. In this way, the subjective image-quality of the user-selected area can be greatly improved without increasing the brightness of the whole screen, providing a desirable solution to the above-mentioned problem.

WO 01/41117 A discloses a method for identifying the position of a video window to be enhanced within a display signal.

EP 0 957 631-A1 relates to a display device, marking signal forming method, marker signal detection circuit and control signal generation circuit.

Accordingly, the present invention is directed to a method of controlling brightness of a user-selected area on a monitor screen that substantially obviates one or more problems due to limitations and disadvantages of the related art.

An object of the present invention is to provide a method of controlling brightness of a user-selected area on a monitor screen that compensates delays that occur between a video signal and horizontal sync signals that a CRT monitor receives from a video card.

Another object of the present invention is to provide a method of controlling brightness of a user-selected area on a monitor screen that compensates a vertical offset due to different display settings between a CRT monitor and an application of a PC.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, the present invention is set out in the independent claims. Some optional features are set out in the claims dependent thereto. According to one aspect there is a method of controlling brightness of a user-selected area on a monitor screen includes the steps of determining a starting point of a topmost image line of a displayed image as a new reference point; detecting a line pattern included in one of image lines of the displayed image, the pattern including an indicator whose ends are horizontally aligned with vertical edges of the user-selected area; measuring horizontal distances of the vertical edges with respect to the reference point; identifying a highlight area by calculating horizontal coordinates of the highlight area from the measured horizontal distances; and amplifying a brightness gain of the identified highlight area.

In another aspect of the present invention, a method of controlling brightness of a user-selected area on a monitor screen includes the steps of determining a starting point of a topmost image line of a displayed image as a reference point; detecting a line pattern included in one of image lines of the displayed image, the pattern including vertical distances of the user-selected area with respect to the pattern-included image line; measuring a vertical offset distance between the reference point and the pattern-included image line; identifying a highlight area by calculating vertical coordinates of the highlight area from the measured offset distance; and amplifying a brightness gain of the identified highlight area.

In another aspect of the present invention, a method of controlling brightness of a user-selected area on a monitor screen includes steps of determining a starting point of a topmost line of a displayed image as a new reference point; detecting a line pattern included in one of image lines of the displayed image, the pattern including an indicator whose ends are horizontally aligned with vertical edges of the user-selected area, the pattern further including vertical distances of the user-selected area with respect to the pattern-included image line; measuring horizontal distances of the vertical edges with respect to the reference point and further measuring a vertical offset distance between the reference point and the pattern-included image line; identifying a highlight area by calculating horizontal and vertical coordinates of the highlight area, the horizontal coordinates being calculated from the measured horizontal distances, the vertical coordinates being calculated from the measured offset distance; and amplifying a brightness gain of the identified highlight area.

The present invention is defined in the accompanying independent claims. Some preferred features of the invention are recited in the dependent claims.

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates an image display system;
FIG. 2 illustrates an example of an active image represented by image information generated by an application of a PC;
FIG.3 illustrates an example of a displayed image based on a video signal and SYNC signals;
FIG. 4 illustrates SYNC signals and a pattern line signal;
FIG. 5 illustrates a method of controlling brightness of a user-selected area on a monitor screen in accordance with the present invention; and
FIG. 6 illustrates the graphical representation of coordinate parameters of a highlight area calculated in accordance with the present invention.

Reference will now be made in detail to the preferred embodiments of the present invention, examples of which are illustrated in the accompanying drawings. Wherever possible, the same reference numbers will be used throughout the drawings to refer to the same or like parts.

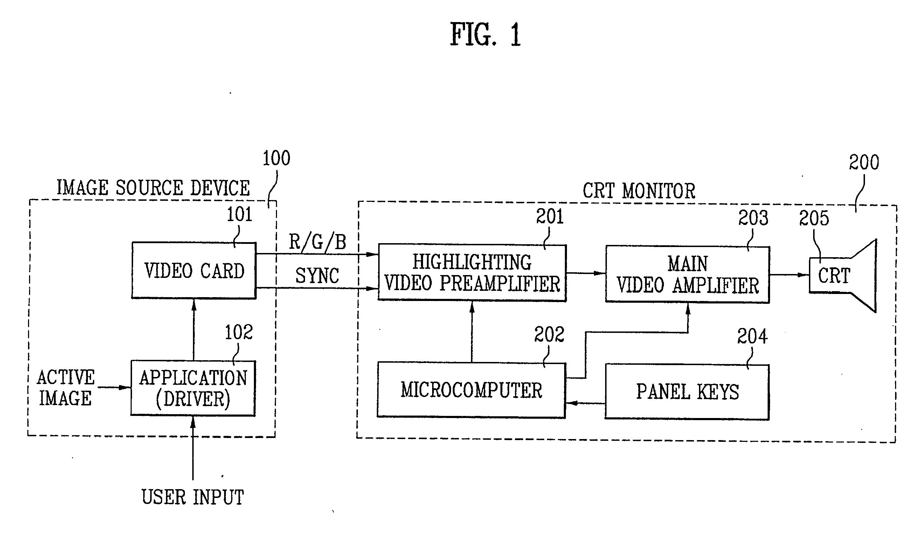

FIG. 1 illustrates an image display system. The system includes an image source device 100 (e.g., a computer) that generates a video signal (an R/G/B signal) and horizontal and vertical sync signals (H-SYNC and V-SYNC) and a CRT (Cathode Ray Tube) monitor 200 that receives the video signal and SYNC signals from the image source device 100 and displays an image based on the received video and SYNC signals. The image source device 100 includes an application unit (e.g., an installed program or driver) 102 that receives information representing an original image and adds a line pattern to the topmost image line of the original image, and a video card 101 that receives the information representing the pattern-added original image and generates a video signal and H-SYNC and V-SYNC signals. The line pattern includes coordinate information of an area selected by a user in the original image.

The CRT monitor 200 includes panel keys 204, a microcomputer 202, a highlighting video preamplifier 201, a main video amplifier 203, and a CRT 205. The highlighting video preamplifier 201 receives the R/G/B signal and SYNC signals from the video 101 and controls brightness of the user-selected area by detecting the pattern previously included by the application unit 102. The microcomputer 202 of the CRT monitor provides a pixel frequency to the highlighting video preamplifier 201 so as to properly display an image in response to the drive signal received from the video card 100. The panel key inputs a command received from the user for controlling display settings of the CRT monitor 200, and the main video amplifier 203 amplifies each of the R, G, and B signals. Then the CRT 205 displays the amplified signals.

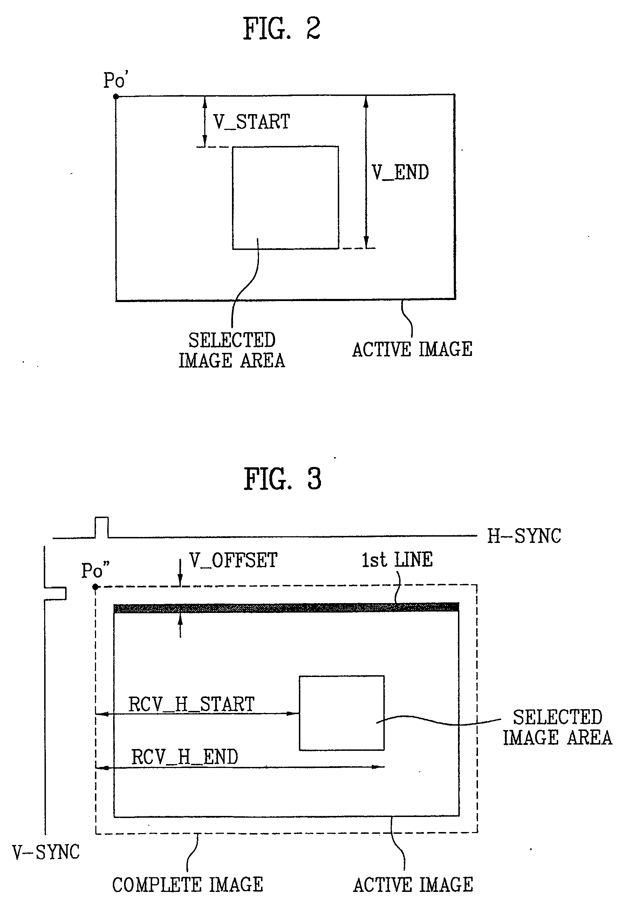

FIG. 2 illustrates an active image represented by the image information that the application unit 102 provides to the video card 101. The application unit 102 of the image source device 100 allows a user to select a desired area (a rectangular box) that needs to be highlighted. The desired area can be selected by, for example, clicking the upper left comer of the desired area with a mouse pointer controlled by a mouse (not illustrated) connected to the image source device 100 and dragging the mouse pointer to the lower right corner of the desired area. Alternatively, the desired area can be simply selected by clicking a window being currently displayed within the active image or by pressing one or more key buttons provided on a keyboard (not illustrated).

When the user selects the desired area for highlighting, the application unit 102 stores the coordinate information of the selected highlight area. The coordinate information includes V_START and V_END, the vertical positions of the upper and lower edges of the selected area with respect to a reference point (e.g., Po' shown in FIG. 2) of the active image. The application unit 102 may further store H_START and H_END, the horizontal positions of the left and right edges of the selected area with respect to the reference point, but these information are not necessarily required for highlighting the selected area in accordance with the present invention. The values of the vertical positions that are stored by the application unit 102 are in lines while the values of the horizontal positions are in pixels. This is because the application unit 102 uses a coordinate system, in which the vertical and horizontal positions of any point in the active image are in lines and pixels, respectively.

After the application unit 102 stores the required coordinate information, then it adds a line pattern to the topmost line of the active image. The pattern includes pattern data that includes coordinate information of the user-selected area (V_START and V_END), a control code, and a pattern-verification code (e.g., checksum). The pattern may further include position information indicating the horizontal positions of the user-selected area. The control code is a code that includes brightness parameters for highlighting one or more user-selected areas and/or any other video parameters such as contrast or emphasis parameters. The application unit 102 ensures proper transmission of the pattern by including a pattern-verification code such as a checksum that allows operations of the CRT monitor 200 to verify that the data in the transmitted pattern has not changed during transmission and to prevent detecting any non-pattern portion of a video signal as a pattern. Typically, a checksum is a number that represents the summation of representative values of all the text in the transmitted pattern data that both the application unit 102 and the CRT monitor 200 may determine. Then, the receiver can verify the data in the pattern by comparing the checksum included in the pattern to a checksum determined by the CRT monitor 200.

Referring back to FIG. 1, after the video card 101 of the image source device 100 receives image information that defines the pattern-added active image from the application unit 102, the video card 101 processes the received image information to generate a RGB signal and horizontal and vertical sync signals (H-SYNC and V-SYNC) to control the operation of the CRT monitor 200. Then the highlighting video preamplifier 201 of the CRT monitor receives the RGB and SYNC signals and performs the highlighting function on the user selected area. Thereafter, the pre-amplified RGB signals are sent to the main video amplifier 203 that amplifies each of the RGB signals and sends the amplified signals to the CRT 205.

FIG. 3 illustrates an actual image being displayed on the CRT 205 in response to the RGB signals and the SYNC signals that the CRT monitor 200 receives from the video card 101. Referring to FIG. 3, it is important to note that the image being actually displayed on the CRT 205 does not exactly coincide with the active image that application unit 102 sends to the video card 101, but it is rather a complete image being larger than the active image due to different display settings between the CRT monitor 200 and the application unit 102. The coordinate system used for representing the position of a point on the complete image shown in FIG. 3 is different from that of the active image shown in FIG. 2. This means that the position of any point in the complete image is measured with respect to a reference point (e.g., Po") in the complete image instead of a reference point (Po') in the active image. In addition, a delay often occurs between the RGB signals and SYNC signals that the CRT monitor receives from the video card 101. This delay generates a further coordinate inconsistency between the complete image and the active image.

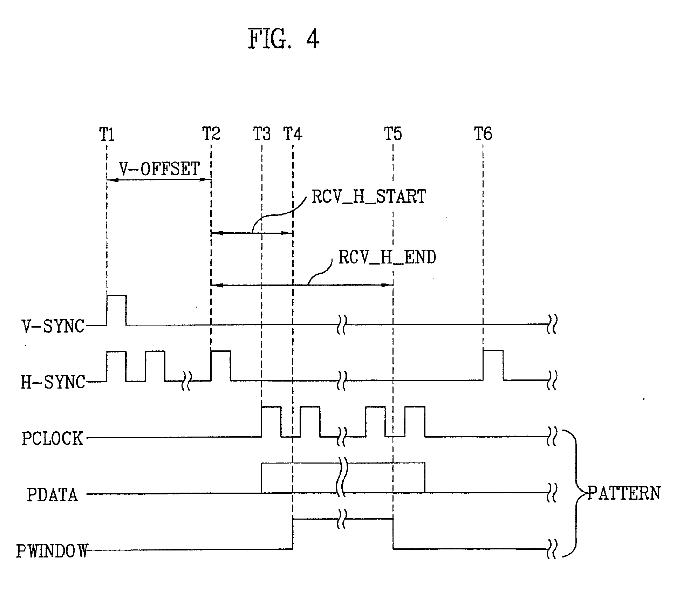

FIG. 4 illustrates the actual V-SYNC, H-SYNC, and a video line signal including a pattern that the highlighting video preamplifier 201 receives from the video card 101. As explained earlier, the video signal corresponding to the first line of the active image includes a pattern signal. The pattern signal is composed of PCLOCK, PDATA, and PWINDOW signals, each of which is included, for example, in the first R, G, and B signals, respectively. More details regarding FIG. 3 and FIG. 4 will be further explained later in this section.

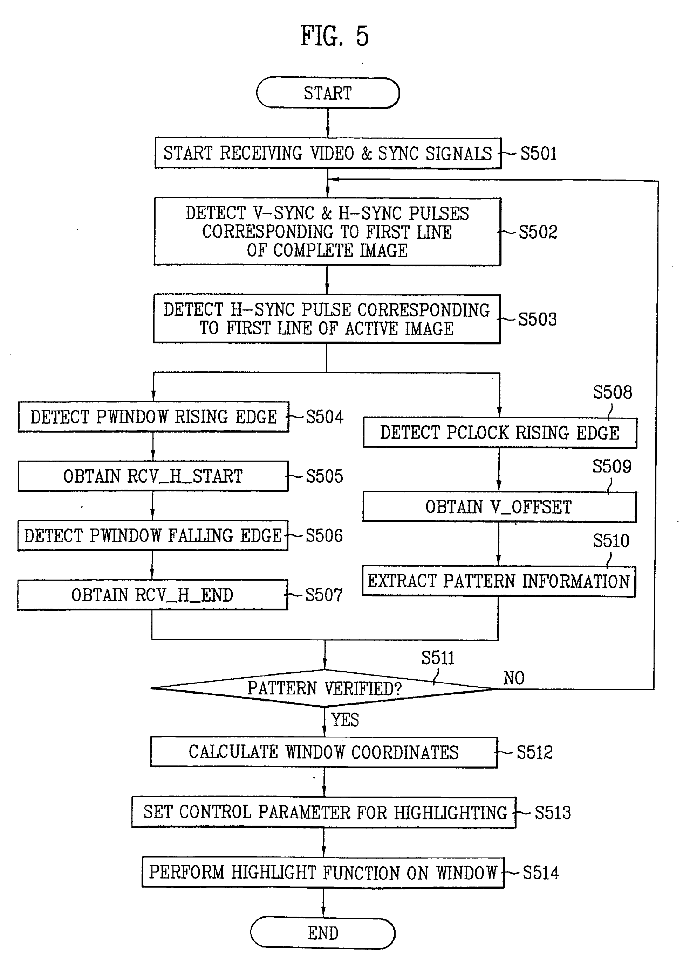

Reference will now be made in detail to the method of controlling brightness of a user-selected area for a monitor in according to the present invention, which is illustrated in FIG. 5. First of all, the highlighting video preamplifier 201 of the CRT monitor starts receiving a RGB signal and H-SYNC and V-SYNC signals from the video card 101 of the image source device 100 (S501). Referring back to FIG. 4, the preamplifier 201 initially detects a V-SYNC pulse and a first H-SYNC pulse at time = T1 (S502). The detected SYNC pulses correspond to the beginning point (Po") of the first video line of the complete image shown in FIG. 3. Between T1 and T2, the preamplifier detects further H-SYNC pulses and a line counter of the preamplifier 201 keeps counting the line number of the video lines detected by the preamplifier 201 before T2.

At time =T2, the preamplifier detects a H-SYNC pulse that corresponds to the beginning of the video line of the complete image that includes the topmost line of the active image (S503). Thereafter, the preamplifier 201 detects a first rising edge of the PCLOCK signal at time = T3 (S508). At this time, the preamplifier 201 is able to determine V-OFFSET which represents the number of the video lines detected by the preamplifier 201 before detecting the video line that includes the topmost line of the active image (S509). The V-OFFSET can be simply calculated by taking a number counted by the line counter of the preamplifier 201.

In addition, the preamplifier 201 extracts the pattern data from the received PDATA signal (S510). PDATA is a signal that includes "0" or "1" according to the real pattern data included therein as shown in FIG. 4. As mentioned earlier, the extracted pattern data includes V_START and V_END, a control code, and a checksum. V_START and V_END represent the vertical positions of the upper and lower edges of the user-selected area with respect to a reference point (e.g., Po' shown in FIG. 2) in the active image. The control code is a code that includes the brightness parameter for highlighting the user-selected area and/or other type of video parameters such as contrast, color temperature, distortion, or emphasis parameters. The checksum is a pattern-verification code that allows the preamplifier 201 of the monitor 200 to verify the pattern data.

The pattern further includes a PWINDOW signal that indicates the horizontal positions of the user-selected area with respect to a reference point in the complete image (e.g.,

Po" shown in FIG. 3). At time = T4, the preamplifier 201 detects the rising edge of the PWINDOW signal (S504). Then the preamplifier 201 determines RCV_H_START, which represents the horizontal position of the left edge of the user-selected area shown in FIG. 3 with respect to Po" in the complete image, using a pixel counter that counts the number of pixels that exist between T2 and T4. The pixel counter uses the pixel frequency value provided by the microcomputer 202 in order to count each pixel. Thereafter, the preamplifier 201 detects the falling edge of the PWINDOW signal (S506) at T5. Similarly, the preamplifier 201 uses the pixel counter to determines RCV_H_END, which represents the horizontal position of the right edge of the user-selected area shown in FIG. 3 with respect to Po" in the complete image, using the pixel counter that also counts the number of pixels that exist between T2 and T5 (S507).

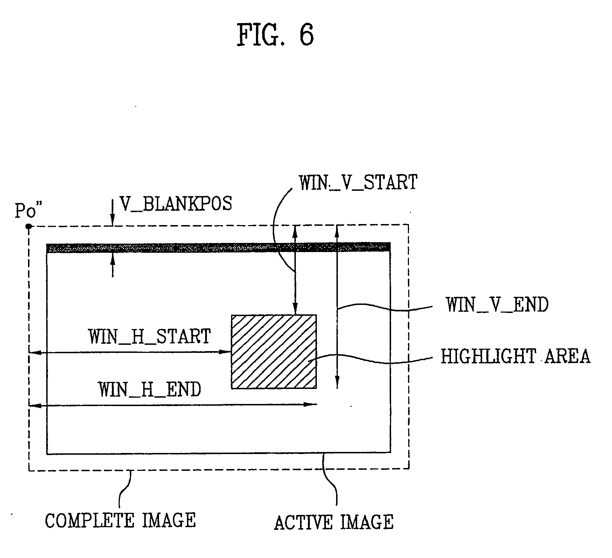

After RCV_H_END is obtained in the step S507 and the pattern data is completely received in the step S510, the preamplifier 201 verifies whether the pattern data is valid by comparing the checksum included in the pattern data and a checksum that it determines (S511). If it is found to be invalid, the preamplifier 201 repeats the steps S502 to S511. Otherwise, it calculates the coordinate parameters of an actual highlight area with respect to the reference point of the complete image as shown in FIG.6 by using the following equations (S512):

$$WIN\_V\_START = V\_OFFSET + V\_START,$$

$$WIN\_V\_END = V\_OFFSET + V\_END,$$

$$WIN\_H\_START = RCV\_H\_START,$$

$$WIN\_H\_END = RCV\_H\_END,$$

and

$$V\_BLANKPOS = V\_OFFSET.$$

FIG. 6 illustrates the graphical representation of the coordinate parameters of the actual highlight area, which are calculated by using the above equations. As shown, WIN_V_START and WIN_V_END represent the vertical positions of the upper and lower edges of the highlight area with respect to the reference point, Po", and WIN_H_START and WIN_H_END represent the horizontal positions of the left and right edges of the highlight area with respect to the same point. In addition, V_BLANKPOS represents the vertical position of the video line of the complete image that can be optionally blanked out. By blanking out the video line that includes the topmost video line of the active image shown in FIG. 6, the user may not be disturbed from viewing the pattern line on the monitor.

Referring back to FIG. 5, when all the coordinate parameters of the highlight area are calculated, the preamplifier 201 sets the highlight parameter of the highlight area to the brightness parameter value included in the control code, which is included in the pattern data extracted in the step S510 (S513). Finally, the preamplifier 201 performs the highlight function on the highlight area by amplifying the brightness gain of the highlight area, whose positions are defined by WIN_V_START, WIN_V_END, WIN_H_START, and WIN_H_END as shown in FIG. 6 (S514).

Alternatively, WIN_H_START and WIN_H_END can be calculated by using the following equations:

$$WIN\_H\_START = RCV\_H\_START + HDELAY1,$$

and

$$WIN\_H\_END = RCV\_H\_END + HDELAY2,$$

where HDELAY1 and HDELAY2 represent additional adjustments for compensating the delays that occurs between an analog input and a hardware output when amplifying the brightness gain.

It will be apparent to those skilled in the art that various modifications and variations can be made in the present invention without departing from the scope of the inventions. Thus, it is intended that the present invention covers the modifications and variations of this invention provided they come within the scope of the appended claims.

**Claims**

1. A method of controlling brightness of a user-selected area having a left and a right edge (SELECTED IMAGE AREA) on a monitor (200) screen, which monitor receives from an image source device (100) video signals containing image frames, said method comprising the steps of :

    displaying an image frame comprising a plurality of image lines and a line pattern added in one of said plurality of image lines of said image frame, said line pattern including coordinate information of the user-selected area, which information includes an indicator signal having a rising and a falling edge, the edges being aligned with the left and right edges of the user-selected area;
    determining the starting point of a topmost image line of the displayed image (COMPLETE IMAGE) frame as a reference point (Po");
    detecting said line pattern added in one of said plurality of image lines of said displayed image (COMPLETE IMAGE) frame;
    measuring the horizontal distances (RCV_H_START & RCV_H_END) of said vertical edges of the user-selected area with respect to said reference point (Po");
    identifying the user selected area by calculating horizontal coordinates of the user-selected area from said measured horizontal distances; and
    amplifying a brightness gain of said identified user-selected area.

2. The method of claim 1, wherein said brightness gain is amplified in accordance with a brightness parameter further included in said line pattern.

3. The method of claim 1, wherein said horizontal distances of said vertical edges of the user-selected area are measured by measuring horizontal distances to the rising and falling edges of the indicator signal with respect to the starting point (Po") of said line pattern (1st LINE).

4. The method of claim 3, wherein said horizontal distances to the rising and falling edges of the indicator signal are measured by counting a number of pixels located between said starting point of said line pattern and the rising and falling edges of the indicator signal, respectively.

5. The method of claim 1, wherein said pattern further includes vertical distances of said user-selected area with respect to said line pattern.

6. The method of claim 5, wherein the user-selected area is identified by further calculating vertical coordinates of the user-selected area from a vertical offset distance (V_OFFSET) between the topmost image lines of the displayed image frame and said line pattern (1st LINE).

7. The method of claim 1, wherein said horizontal coordinates of the user-selected area are equivalent to said measured horizontal distances of said vertical edges.

8. A method of controlling brightness of a user-selected area having an upper and a lower edge on a monitor (200) screen, which monitor receives from an image source device (100) video signals containing image frames, the method comprising:

    determining the starting point of a topmost image line of a displayed image 5. frame as a reference point;
    detecting a line pattern added in one of image lines of said displayed image frame, said pattern including vertical distance values of said user-selected area with respect to said line pattern;
    measuring a vertical offset distance (V_OFFSET) between the topmost image line of the displayed image frame and said line pattern (1st LINE);
    identifying the user-selected area by calculating vertical coordinates of the user-selected area from said measured offset distance and said vertical distance values; and
    amplifying a brightness gain of said identified user-selected area.

9. The method of claim 8, wherein said brightness gain is amplified in accordance with a brightness parameter further included in said pattern.

10. The method of claim 8, wherein said vertical offset distance is measured by counting a number of image lines being located between the topmost image line of the displayed image frame and said line pattern.

11. The method of claim 8, wherein said line pattern further includes an indicator signal whose rising and falling edges are aligned with vertical edges of said user-selected area.

12. The method of claim 11, wherein the user selected area is identified by further calculating horizontal coordinates of the user-selected area from horizontal distances of said vertical edges with respect to said reference point.

13. The method of claim 8, wherein said vertical coordinates of the user-selected area are obtained by adding said measured offset distance with said vertical distances of said user-selected area, respectively.

14. A method of claim 11, further comprising:

measuring horizontal distances of said vertical edges with respect to said reference point; and
identifying the user-selected area by calculating horizontal coordinates of the user-selected area, said horizontal coordinates calculated from said measured horizontal distances.

15. The method of claim 14, wherein said brightness gain is amplified in accordance with a brightness parameter further included in said line pattern.

16. The method of claim 14, wherein said horizontal distances of said vertical edges are measured by measuring horizontal distances to the rising and falling edges of the indicator signal with respect to the starting point of said line pattern.

17. The method of claim 16, wherein said horizontal distances to the rising and falling edges of the indicator signal are measured by counting a number of pixels that are located between said starting point of said line pattern and the rising and falling edges of the indicator signal, respectively.

18. The method of claim 14, wherein said vertical offset distance is measured by counting a number of image lines located between the topmost image lines of the displayed image frame and said line pattern.

19. The method of claim 14, wherein said horizontal coordinates of the user-selected area are equivalent to said measured horizontal distances of said vertical edges.

20. The method of claim 14, wherein said vertical coordinates of the user-selected area are obtained by adding said measured offset distance with said vertical distances of said user-selected area, respectively.

**Patentansprüche**

1. Verfahren zum Steuern der Helligkeit eines von einem Benutzer gewählten, einen rechten und linken Rand aufweisenden Bereichs (SELECTED IMAGE AREA) auf einem Bildschirm (200), wobei der Bildschirm Videosignale, die Bild-Frames enthalten, von einer Bildquellenvorrichtung (100) empfängt, wobei das Verfahren die Schritte umfasst:

Anzeigen eines Bild-Frames, der eine Mehrzahl von Bildlinien und ein Linienmuster enthält, das zu einer der Mehrzahl von Bildlinien des Bild-Frames hinzugefügt ist, wobei das Linienmuster Koordinateninformationen bezüglich des vom Benutzer gewählten Bereichs umfasst, wobei die Koordinateninformationen ein Indikatorsignal enthalten, das eine steigende und eine fallende Flanke aufweist, wobei die Flanken mit dem linken und dem rechten Rand des vom Benutzer gewählten Bereichs ausgerichtet sind;
Bestimmen des Ausgangspunkts einer obersten Bildlinie des angezeigten Bild(COMPLETE IMAGE)-Frames als Referenzpunkt (Po'');
Detektieren des zu einer der Mehrzahl von Bildlinien des angezeigten Bild(COMPLETE IMAGE)-Frames hinzugefügten Linienmusters;
Messen der horizontalen Abstände (RCV_H_START & RCV_H_END) der vertikalen Ränder des benutzergewählten Bereichs in Bezug auf den Referenzpunkt (Po'');
Identifizieren des vom Benutzer gewählten Bereichs durch Berechnen der horizontalen Koordinaten des vom Benutzer gewählten Bereichs anhand der gemessenen horizontalen Abstände; und
Verstärken eines Helligkeitspegels des identifizierten, vom Benutzer gewählten Bereichs.

**2.** Verfahren nach Anspruch 1, wobei der Helligkeitspegel gemäß einem Helligkeitsparameter, der auch im Linienmuster enthalten ist, verstärkt wird.

**3.** Verfahren nach Anspruch 1, wobei die horizontalen Abstände der vertikalen Ränder des vom Benutzer gewählten Bereichs durch Messen von horizontalen Abständen zur steigenden und zur fallenden Flanke des Indikatorsignals in Bezug auf den Ausgangspunkt (Po ") des Linienmusters (1st LINE) gemessen werden.

**4.** Verfahren nach Anspruch 3, wobei die horizontalen Abstände zur steigenden und zur fallenden Flanke des Indikatorsignals durch Zählen einer Anzahl von Pixeln, die zwischen dem Ausgangspunkt des Linienmusters und der steigenden bzw. der fallenden Flanke des Indikatorsignals vorhanden sind, gemessen werden.

**5.** Verfahren nach Anspruch 1, wobei das Muster weiters vertikale Abstände des vom Benutzer gewählten Bereichs in Bezug auf das Linienmuster enthält.

**6.** Verfahren nach Anspruch 5, wobei der vom Benutzer gewählte Bereich durch weiteres Berechnen von vertikalen Koordinaten des vom Benutzer gewählten Bereichs anhand eines vertikalen Offset-Abstands (V_OFFSET) zwischen den obersten Bildlinien des angezeigten Bild-Frames und dem Linienmuster (1. Linie) identifiziert wird.

**7.** Verfahren nach Anspruch 1, wobei die horizontalen Koordinaten des vom Benutzer gewählten Bereichs zu den gemessenen horizontalen Abständen der vertikalen Ränder äquivalent sind.

**8.** Verfahren zum Steuern der Helligkeit eines von einem Benutzer gewählten Bereichs mit einem oberen und einem unteren Rand auf einem Bildschirm (200), wobei der Bildschirm Videosignale, die Bild-Frames enthalten, von einer Bildquellenvorrichtung (100) empfängt, wobei das Verfahren umfasst:

Bestimmen des Ausgangspunkts einer obersten Bildlinie eines angezeigten Bild-Frames als Referenzpunkt;
Detektieren eines Linienmusters, das zu einer der Bildlinien des angezeigten Bild-Frames hinzugefügt ist, wobei das Muster Werte über den vertikalen Abstand des vom Benutzer gewählten Bereichs in Bezug auf das Linienmuster enthält;
Messen eines vertikalen Offset-Abstands (V_OFFSET) zwischen der obersten Bildlinie des angezeigten Bild-Frames und dem Linienmuster (1. Linie):

Identifizieren des vom Benutzer gewählten Bereichs durch Berechnen von vertikalen Koordinaten des vom Benutzer gewählten Bereichs anhand des gemessenen Offset-Abstands und der Werte betreffend den vertikalen Abstand; und
Verstärken eines Helligkeitspegels des identifizierten, vom Benutzer gewählten Bereichs.

**9.** Verfahren nach Anspruch 8, wobei der Helligkeitspegel gemäß einem Helligkeitsparameter, der auch im Linienmuster enthalten ist, verstärkt wird.

**10.** Verfahren nach Anspruch 8, wobei der Abstand des vertikalen Offsets durch Zählen einer Anzahl von Bildlinien gemessen wird, die sich zwischen der obersten Bildlinie des angezeigten Bild-Frames und dem Linienmuster befinden.

**11.** Verfahren nach Anspruch 8, wobei das Linienmuster weiters ein Indikatorsignal enthält, dessen steigende und fallende Flanke mit den vertikalen Rändern des vom Benutzer gewählten Bereichs ausgerichtet ist.

**12.** Verfahren nach Anspruch 11, wobei der vom Benutzer gewählte Bereich durch weiteres Berechnen von horizontalen Koordinaten des vom Benutzer gewählten Bereichs anhand von horizontalen Abständen der vertikalen Ränder in Bezug auf den Referenzpunkt identifiziert wird.

**13.** Verfahren nach Anspruch 8, wobei die vertikalen Koordinaten des vom Benutzer gewählten Bereichs durch Hinzufügen des gemessenen Offset-Abstands zu den jeweiligen vertikalen Abständen des vom Benutzer gewählten Bereichs erhalten werden.

**14.** Verfahren nach Anspruch 11, weiters umfassend:

Messen von horizontalen Abständen der vertikalen Ränder in Bezug auf den Referenzpunkt; und

Identifizieren des vom Benutzer gewählten Bereichs durch Berechnen von horizontalen Koordinaten des vom Benutzer gewählten Bereichs, wobei die horizontalen Koordinaten anhand der gemessenen horizontalen Abstände berechnet werden.

**15.** Verfahren nach Anspruch 14, wobei der Helligkeitspegel gemäß einem Helligkeitsparameter, der auch im Linienmuster enthalten ist, verstärkt wird.

**16.** Verfahren nach Anspruch 14, wobei die horizontalen Abstände der vertikalen Ränder durch Messen von horizontalen Abständen zur steigenden und zur fallenden Flanke des Indikatorsignals in Bezug auf den Ausgangspunkt des Linienmusters gemessen werden.

**17.** Verfahren nach Anspruch 16, wobei die horizontalen Abstände zur steigenden und zur fallenden Flanke des Indikatorsignals durch Zählen einer Anzahl von Pixeln, die zwischen dem Ausgangspunkt des Linienmusters und der steigenden bzw. der fallenden Flanke des Indikatorsignals vorhanden sind, gemessen werden.

**18.** Verfahren nach Anspruch 14, wobei der Abstand des vertikalen Offsets durch zählen einer Anzahl von Bildlinien gemessen wird, die sich zwischen den obersten Bildlinien des angezeigten Bild-Frames und dem Linienmuster befinden.

**19.** Verfahren nach Anspruch 14, wobei die horizontalen Koordinaten des vom Benutzer gewählten Bereichs zu den gemessenen horizontalen Abständen der vertikalen Ränder äquivalent sind.

**20.** Verfahren nach Anspruch 14, wobei die vertikalen Koordinaten des vom Benutzergewählten Bereichs durch Hinzufügen des gemessenen Offset-Abstands zu den jeweiligen vertikalen Abständen des vom Benutzer gewählten Bereichs erhalten werden.

## Revendications

**1.** Procédé de contrôle de la luminosité d'une région sélectionnée par un utilisateur comportant un bord gauche et un bord droit (REGION D'IMAGE SELECTIONNEE) sur un écran de moniteur (200), lequel moniteur reçoit d'un dispositif de source d'images (100) des signaux vidéo contenant des trames d'image, ledit procédé comprenant les étapes consistant à :

afficher une trame d'image comprenant une pluralité de lignes d'image et un motif de ligne ajouté dans une de ladite pluralité de lignes d'image de ladite trame d'image, ledit motif de lignes comprenant des informations de coordonnées de la région sélectionnée par l'utilisateur, lesquels informations comprennent un signal indicateur comportant un bord montant et un bord descendant, les bords étant alignés avec les bords gauche et droit de la région sélectionnée par l'utilisateur ;
déterminer le point de départ d'une ligne d'image la plus haute de la trame d'image affichée (IMAGE COMPLETE) comme un point de référence (Po") ;
détecter ledit motif de ligne ajouté dans une de ladite pluralité de lignes d'image de ladite trame d'image affichée (IMAGE COMPLETE) ;
mesurer les distances horizontales (RCV_H_START et RCV_H_END) desdits bords verticaux de la région sélectionnée par l'utilisateur par rapport audit point de référence (Po") ;
identifier la région sélectionnée par l'utilisateur en calculant les coordonnées horizontales de la région sélectionnée par l'utilisateur à partir desdites distances horizontales mesurées ; et
amplifier un gain de luminosité de ladite région sélectionnée par l'utilisateur.

**2.** Procédé selon la revendication 1, dans lequel ledit gain de luminosité est amplifié selon un paramètre de luminosité également inclus dans ledit motif de lignes.

**3.** Procédé selon la revendication 1, dans lequel lesdites distances horizontales desdits bords verticaux de la région sélectionnée par l'utilisateur sont mesurées en mesurant les distances horizontales jusqu'aux bords montant et descendant du signal indicateur par rapport au point de départ (Po") dudit motif de lignes (1st LINE).

**4.** Procédé selon la revendication 3, dans lequel lesdites distances horizontales jusqu'aux bords montant et descendant du signal indicateur sont mesurées en comptant un nombre de pixels situés entre ledit point de départ dudit motif de lignes et les bords montant et descendant du signal indicateur, respectivement.

**5.** Procédé selon la revendication 1, dans lequel ledit motif comprend également les distances verticales de ladite région sélectionnée par l'utilisateur par rapport audit motif de lignes.

**6.** Procédé selon la revendication 5, dans lequel la région sélectionnée par l'utilisateur est identifiée en calculant également les coordonnées verticales de la région sélectionnée par l'utilisateur à partir d'une distance décalée verticale (V_OFFSET) entre les lignes d'image les plus hautes de la trame d'image affichée et ledit motif de lignes (1st LINE).

**7.** Procédé selon la revendication 1, dans lequel lesdites coordonnées horizontales de la région sélectionnée par l'utilisateur sont équivalentes auxdites distances horizontales mesurées desdits bords verticaux.

**8.** Procédé de contrôle de la luminosité d'une région sélectionnée par un utilisateur ayant un bord supérieur et un bord inférieur sur un écran de moniteur (200), lequel moniteur reçoit d'un dispositif de source d'images (100) des signaux vidéo contenant des trames d'image, ledit procédé comprenant :

la détermination du point de départ d'une ligne d'image la plus haute d'une trame d'image affichée comme un point de référence ;

la détection d'un motif de ligne ajouté dans une des lignes d'image de ladite trame d'image affichée, ledit motif comprenant des valeurs de distance verticale de ladite région sélectionnée par l'utilisateur par rapport audit motif de lignes ;

la mesure d'une distance décalée verticale (V_OFFSET) entre la ligne d'image la plus haute de la trame d'image affichée et ledit motif de lignes (1st LINE).

l'identification de la région sélectionnée par l'utilisateur en calculant les coordonnées verticales de la région sélectionnée par l'utilisateur à partir de ladite distance décalée mesurée et desdites valeurs de distance verticale ; et

l'amplification d'un gain de luminosité de ladite région sélectionnée par l'utilisateur.

**9.** Procédé selon la revendication 8, dans lequel ledit gain de luminosité est amplifié selon un paramètre de luminosité également compris dans ledit motif.

**10.** Procédé selon la revendication 8, dans lequel ladite distance décalée verticale est mesurée en comptant un nombre de lignes d'image situées entre la ligne d'image la plus haute de la trame d'image affichée et ledit motif de lignes.

**11.** Procédé selon la revendication 8, dans lequel ledit motif de lignes comprend également un signal indicateur dont les bords montant et descendant sont alignés avec les bords verticaux de ladite région sélectionnée par l'utilisateur.

**12.** Procédé selon la revendication 11, dans lequel la région sélectionnée par l'utilisateur est identifiée en calculant également les coordonnées horizontales de la région sélectionnée par l'utilisateur parmi les distances horizontales desdits bords verticaux par rapport audit point de référence.

**13.** Procédé selon la revendication 8, dans lequel lesdites coordonnées verticales de la région sélectionnée par l'utilisateur sont obtenues en ajoutant ladite distance décalée mesurée avec lesdites distances verticales de ladite région sélectionnée par l'utilisateur, respectivement.

**14.** Procédé selon la revendication 11, comprenant également :

la mesure des distances horizontales desdits bords verticaux par rapport audit point de référence ; et

l'identification de la région sélectionnée par l'utilisateur en calculant les coordonnées horizontales de la région sélectionnée par l'utilisateur, lesdites coordonnées horizontales étant calculées à partir desdites distances horizontales mesurées.

**15.** Procédé selon la revendication 14, dans lequel ledit gain de luminosité est amplifié selon un paramètre de luminosité également compris dans ledit motif de lignes.

**16.** Procédé selon la revendication 14, dans lequel lesdites distances horizontales desdits bords verticaux sont mesurées en mesurant les distances horizontales jusqu'aux bords montant et descendant du signal indicateur par rapport au point de départ dudit motif de lignes.

17. Procédé selon la revendication 16, dans lequel lesdites distances horizontales jusqu'aux bords montant et descendant du signal indicateur sont mesurées en comptant un nombre de pixels qui sont situés entre ledit point de départ dudit motif de lignes et les bords montant et descendant du signal indicateur, respectivement.

18. Procédé selon la revendication 14, dans lequel ladite distance décalée verticale est mesurée en comptant un nombre de lignes d'image situées entre les lignes d'image les plus hautes de la trame d'image affichée et ledit motif de lignes.

19. Procédé selon la revendication 14, dans lequel lesdites coordonnées horizontales de la région sélectionnée par l'utilisateur sont équivalentes auxdites distances horizontales mesurées desdits bords verticaux.

20. Procédé selon la revendication 14, dans lequel lesdites coordonnées verticales de la région sélectionnée par l'utilisateur sont obtenues en ajoutant ladite distance décalée mesurée avec lesdites distances verticales de ladite région sélectionnée par l'utilisateur, respectivement.

# FIG. 1

IMAGE SOURCE DEVICE — 100

- VIDEO CARD — 101
- APPLICATION (DRIVER) — 102
- ACTIVE IMAGE
- USER INPUT

R/G/B
SYNC

CRT MONITOR — 200

- HIGHLIGHTING VIDEO PREAMPLIFIER — 201
- MAIN VIDEO AMPLIFIER — 203
- CRT — 205
- MICROCOMPUTER — 202
- PANEL KEYS — 204

# FIG. 2

Po'

V_START

V_END

SELECTED
IMAGE AREA

ACTIVE IMAGE

# FIG. 3

H-SYNC

Po"

V_OFFSET

1st LINE

RCV_H_START

RCV_H_END

SELECTED
IMAGE AREA

V-SYNC

COMPLETE IMAGE

ACTIVE IMAGE

# FIG. 4

# FIG. 5

```
                        START

            START RECEIVING VIDEO & SYNC SIGNALS ─── S501

            DETECT V-SYNC & H-SYNC PULSES
            CORRESPONDING TO FIRST LINE ─── S502
            OF COMPLETE IMAGE

            DETECT H-SYNC PULSE CORRESPONDING ─── S503
            TO FIRST LINE OF ACTIVE IMAGE
```

S508

DETECT PWINDOW RISING EDGE ─── S504

DETECT PCLOCK RISING EDGE

S509

OBTAIN RCV_H_START ─── S505

OBTAIN V_OFFSET

S510

DETECT PWINDOW FALLING EDGE ─── S506

EXTRACT PATTERN INFORMATION

OBTAIN RCV_H_END ─── S507

S511

PATTERN VERIFIED?     NO

YES

CALCULATE WINDOW COORDINATES ─── S512

SET CONTROL PARAMETER FOR HIGHLIGHTING ─── S513

PERFORM HIGHLIGHT FUNCTION ON WINDOW ─── S514

END

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0141117 A
- EP 0957631 A1